Europäisches Patentamt

European Patent Office

Office européen des brevets

(19)

(11) **EP 1 413 859 A1**

(12) **EUROPEAN PATENT APPLICATION**

| | |
|---|---|
| (43) Date of publication:<br>**28.04.2004 Bulletin 2004/18** | (51) Int Cl.[7]: **G01G 23/01** |

(21) Application number: **03023831.5**

(22) Date of filing: **20.10.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK**<br><br>(30) Priority: **21.10.2002 JP 2002305399**<br><br>(71) Applicant: **TANITA CORPORATION**<br>**Tokyo (JP)** | (72) Inventor: **Yoshizawa, Masaki**<br>**Itabashi-ku Tokyo (JP)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Gravity corrected scale, gravity correction indicator and gravity corrected scale system**

(57)     According to the present invention the weight measuring unit (35) provides a weight value by measuring an object to be measured, the audio correction signal receiver (36) receives an audio gravity correction signal, and the gravity correction relevant value converter (37) converts the audio gravity correction signal received by said audio correction signal receiver (36) into a gravity correction relevant value. Furthermore, the gravity correction relevant value storage unit (38) stores the gravity correction relevant value converted by said gravity correction relevant value converter (37). Then, the corrected weight value calculation unit (39) calculates the corrected weight value by correcting the weight value provided by the weight measuring unit (35), based on the gravity correction relevant value stored in the gravity correction relevant value storage unit (38).

FIG. 1

**EP 1 413 859 A1**

**Description**

**Background of the Invention:**

**Field of the Invention:**

The present invention relates to a gravity corrected scale having capability of gravity correction using error correction signal based on gravitational acceleration which is received from outside without any physical contact; a gravity correction indicator for transmitting the error correction signal based on gravitational acceleration to the gravity corrected scale without any physical contact therebetween; and a gravity corrected scale system comprising the gravity corrected scale and the gravity correction indicator.

**Prior Art:**

Many gravity corrected scales in the prior art are designed to receive information for gravity correction from some input unit using keys (refer to the following Patent Documents 1 and 2, for example).
Additional gravity corrected scales also currently available are those that have gravity correction capability by determining the positions of the scales based on the signals from GPS (Global Positioning System) satellites (refer to the following Patent Documents 3 and 4, for example).

Patent Document 1: Patent Laid-Open No. 2002-228517
Patent Document 2: Patent Laid-Open No. 2002-250654
Patent Document 3: Patent Laid-Open No. 2001-59769
Patent Document 4: Patent Laid-Open No. 2002-214032

In general, the previous gravity corrected scales configured to receive gravity correction information from the key input unit have significant deficiencies in that they must be subjected to the gravity correction in unpackaged condition of the product (i.e. the gravity corrected scale). Such unpackaged condition of the product, if necessary before it is delivered to an end user, may lead to degradation in value of the product. Accordingly, there is a need for wholesale dealers and retail stores existed between factories and end users to stock greater number of several types of the gravity corrected scale products that have been subjected to gravity correction to suit the areas where they are used by end users.
Furthermore, the additional gravity corrected scales that have capability of gravity correction based on the position of the scales determined with the aid of the GPS signals are defective in that they can conduct no gravity correction if they are located inside the buildings, warehouses and the like because of RF signals shielded.
In view of the above an object of the present invention is to solve the prior art problems as described above and to provide a new and improved gravity corrected scale having capability of gravity correction even in packaged condition irrespective of its location where it is present. Another object of the present invention is to provide a new and improved gravity correction indicator for transmitting information for gravity correction to the gravity corrected scale without any physical contact therebetween. Further object of the present invention is to provide a new and improved gravity corrected scale system comprising the gravity corrected scale and the gravity correction indicator in which the gravity correction indicator can transmit the information for gravity correction to the gravity corrected scale irrespective of its location where it is present and without any physical contact therebetween, and then, the gravity corrected scale can be subjected to gravity correction even if it is in packaged condition.

**Summary of the Invention:**

In order to attain such objects, according to first aspect of the present invention, there is provided a gravity corrected scale comprising: a weight measuring unit; an audio correction signal receiver; a gravity correction relevant value converter; a gravity correction relevant value storage unit; and a corrected weight value calculation unit, wherein
said weight measuring unit provides a weight value by measuring an object to be measured,
said audio correction signal receiver receives an audio gravity correction signal,
said gravity correction relevant value converter converts the audio gravity correction signal received by said audio correction signal receiver into a gravity correction relevant value,
said gravity correction relevant value storage unit stores the gravity correction relevant value converted by said gravity correction relevant value converter, and
said corrected weight value calculation unit calculates a corrected weight value by correcting the weight value provided by said weight measuring unit based on the gravity correction relevant value stored in said gravity correction

EP 1 413 859 A1

relevant value storage unit.

According to one embodiment the gravity corrected scale further comprises an audio completion signal transmitter which transmits an audio gravity correction completion signal after receiving the audio gravity correction signal by said audio correction signal receiver.

According to second aspect of the present invention there is provided a gravity corrected scale comprising: a weight measuring unit; an optical correction signal receiver; a gravity correction relevant value converter; a gravity correction relevant value storage unit; and a corrected weight value calculation unit, wherein

said weight measuring unit provides a weight value by measuring an object to be measured,

said optical correction signal receiver receives an optical gravity correction signal,

said gravity correction relevant value converter converts the optical gravity correction signal received by said optical correction signal receiver into a gravity correction relevant value,

said gravity correction relevant value storage unit stores the gravity correction relevant value converted by said gravity correction relevant value converter, and

said corrected weight value calculation unit calculates a corrected weight value by correcting the weight value provided by said weight measuring unit based on the gravity correction relevant value stored in said gravity correction relevant value storage unit.

According to one embodiment the gravity corrected scale further comprises an optical completion signal transmitter which transmits an optical gravity correction completion signal after receiving the optical gravity correction signal by said optical correction signal receiver.

According to third aspect of the present invention there is provided a gravity corrected scale comprising: a weight measuring unit; an electromagnetic correction signal receiver; a gravity correction relevant value converter; a gravity correction relevant value storage unit; and a corrected weight value calculation unit, wherein

said weight measuring unit provides a weight value by measuring an object to be measured,

said electromagnetic correction signal receiver receives an electromagnetic gravity correction signal,

said gravity correction relevant value converter converts the electromagnetic gravity correction signal received by said electromagnetic correction signal receiver into a gravity correction relevant value,

said gravity correction relevant value storage unit stores the gravity correction relevant value converted by said gravity correction relevant value converter, and

said corrected weight value calculation unit calculates a corrected weight value by correcting the weight value provided by said weight measuring unit based on the gravity correction relevant value stored in said gravity correction relevant value storage unit.

According to one embodiment the gravity corrected scale further comprises an electromagnetic completion signal transmitter which transmits an electromagnetic gravity correction completion signal after receiving the electromagnetic gravity correction signal by said electromagnetic correction signal receiver.

According to another embodiment the gravity corrected scale further comprises: a gravity correction supplemental value input unit; and a gravity correction supplemental value storage unit, wherein

said gravity correction supplemental value input unit enters a supplemental value for gravity correction, and

said gravity correction supplemental value storage unit stores the supplemental value for gravity correction entered by said gravity correction supplemental value input unit, and wherein

said corrected weight value calculation unit calculates the corrected weight value by correcting the weight value provided by said weight measuring unit based on the gravity correction relevant value stored in said gravity correction relevant value storage unit and the gravity correction supplemental value stored in said gravity correction supplemental value storage unit.

According to fourth aspect of the present invention there is provided a gravity correction indicator comprising: a gravity correction information input unit; a signal converter; and an audio correction signal transmitter, wherein

said gravity correction information input unit enters information for gravity correction,

said signal converter converts the information for gravity correction entered by said gravity correction information input unit into a gravity correction signal, and

said audio correction signal transmitter transmits the gravity correction signal converted by said signal converter as audio signal.

According to one embodiment the gravity correction indicator further comprises: an audio completion signal receiver; and a completion announcement unit, wherein

said audio completion signal receiver receives an audio gravity correction completion signal after transmitting the audio gravity correction signal by said audio correction signal transmitter, and

said completion announcement unit announces completion of gravity correction after receiving the audio gravity correction completion signal by said audio completion signal receiver.

According to fifth aspect of the present invention there is provided a gravity correction indicator comprising: a gravity correction information input unit; a signal converter; and an optical correction signal transmitter, wherein

said gravity correction information input unit enters information for gravity correction,

said signal converter converts the information for gravity correction entered by said gravity correction information input unit into a gravity correction signal, and

said optical correction signal transmitter transmits the gravity correction signal converted by said signal converter as optical signal.

According to one embodiment the gravity correction indicator further comprises: an optical completion signal receiver; and a completion announcement unit, wherein

said optical completion signal receiver receives an optical gravity correction completion signal after transmitting the optical gravity correction signal by said optical correction signal transmitter, and

said completion announcement unit announces completion of gravity correction after receiving the optical gravity correction completion signal by said optical completion signal receiver.

According to sixth aspect of the present invention there is provided a gravity correction indicator comprising: a gravity correction information input unit; a signal converter; and an electromagnetic correction signal transmitter, wherein

said gravity correction information input unit enters information for gravity correction,

said signal converter converts the information for gravity correction entered by said gravity correction information input unit into a gravity correction signal, and

said electromagnetic correction signal transmitter transmits the gravity correction signal converted by said signal converter as electromagnetic signal.

According to one embodiment the gravity correction indicator further comprises: an electromagnetic completion signal receiver; and a completion announcement unit, wherein

said electromagnetic completion signal receiver receives an electromagnetic gravity correction completion signal after transmitting the electromagnetic gravity correction signal by said electromagnetic correction signal transmitter, and

said completion announcement unit announces completion of gravity correction after receiving the electromagnetic gravity correction completion signal by said electromagnetic completion signal receiver.

According to seventh aspect of the present invention there is provided a gravity corrected scale system comprising the gravity corrected scale and the gravity correction indicator, as described above, wherein an audio gravity correction signal transmitted by an audio correction signal transmitter of the gravity correction indicator is received by an audio correction signal receiver of the gravity corrected scale.

According to one embodiment of the gravity corrected scale system said gravity corrected scale further includes:

an audio completion signal transmitter which transmits an audio gravity correction completion signal after receiving the audio gravity correction signal by said audio correction signal receiver,

said gravity correction indicator further includes:

an audio completion signal receiver which receives an audio gravity correction completion signal after transmitting the audio gravity correction signal by said audio correction signal transmitter; and

a completion announcement unit which announces completion of gravity correction after receiving the audio gravity correction completion signal by said audio completion signal receiver, and furthermore,

the audio gravity correction completion signal transmitted by said audio completion signal transmitter is received by said audio completion signal receiver.

According to eighth aspect of the present invention there is provided another gravity corrected scale system comprising the gravity corrected scale and the gravity correction indicator, as described above, wherein an optical gravity correction signal transmitted by an optical correction signal transmitter of the gravity correction indicator is received by an optical correction signal receiver of the gravity corrected scale.

According to one embodiment of the gravity corrected scale system said gravity corrected scale further includes:

an optical completion signal transmitter which transmits an optical gravity correction completion signal after receiving the optical gravity correction signal by said optical correction signal receiver,

said gravity correction indicator further includes:

an optical completion signal receiver which receives an optical gravity correction completion signal after transmitting the optical gravity correction signal by said optical correction signal transmitter; and

a completion announcement unit which announces completion of gravity correction after receiving the optical gravity correction completion signal by said optical completion signal receiver, and furthermore,

the optical gravity correction completion signal transmitted by said optical completion signal transmitter is received by said optical completion signal receiver.

According to ninth aspect of the present invention there is provided further gravity corrected scale system comprising the gravity corrected scale and the gravity correction indicator, as described above, wherein an electromagnetic gravity correction signal transmitted by an electromagnetic correction signal transmitter of the gravity correction indicator is received by an electromagnetic correction signal receiver of the gravity corrected scale.

According to one embodiment of the gravity corrected scale system said gravity corrected scale further includes:

an electromagnetic completion signal transmitter which transmits an electromagnetic gravity correction completion signal after receiving the electromagnetic gravity correction signal by said electromagnetic correction signal receiver,

said gravity correction indicator further includes:

an electromagnetic completion signal receiver which receives an electromagnetic gravity correction completion signal after transmitting the electromagnetic gravity correction signal by said electromagnetic correction signal transmitter; and

a completion announcement unit which announces completion of gravity correction after receiving the electromagnetic gravity correction completion signal by said electromagnetic completion signal receiver, and furthermore,

the electromagnetic gravity correction completion signal transmitted by said electromagnetic completion signal transmitter is received by said electromagnetic completion signal receiver.

**Brief Description of the Drawings:**

The present invention will now be described in more detail with reference to the accompanying drawings, in which:

Fig. 1 is a block diagram illustrating configuration of a gravity corrected scale according to the present invention;
Fig. 2 is a perspective view illustrating external appearance of the gravity corrected scale;
Fig. 3 is a perspective view illustrating external appearance of the gravity corrected scale;
Fig. 4 is a flow chart illustrating process of registration of gravity correction relevant value for the gravity corrected scale;
Fig. 5 is a flow chart illustrating process of weight measurement and gravity correction for the gravity corrected scale;
Fig. 6 is a block diagram illustrating configuration of a gravity correction indicator;
Fig. 7 is a perspective view illustrating external appearance of the gravity correction indicator;
Fig 8 is a flow chart illustrating process of transmission of gravity correction information for the gravity correction indicator;
Fig. 9 is a list of zones for gravity correction;
Fig. 10A shows a pattern of gravity correction signal for the case of Zone "11" in the list of Fig. 9;
Fig. 10B shows a pattern of gravity correction signal for the case of Zone Number "3" in the list of Fig. 9;
Fig. 11 shows a pattern of gravity correction completion signal;
Fig. 12 is a display screen on which the weight value and the zone number are displayed;
Fig. 13 is a block diagram illustrating an optical correction signal receiver forming a part of the gravity corrected scale;
Fig. 14 is a block diagram illustrating an optical completion signal transmitter forming a part of the gravity corrected scale;
Fig. 15 is a block diagram illustrating an optical completion signal receiver forming a part of the gravity correction indicator;
Fig. 16 is a block diagram illustrating an optical correction signal transmitter forming a part of the gravity correction indicator;
Fig. 17 is a block diagram illustrating an electromagnetic correction signal receiver forming a part of the gravity corrected scale;
Fig. 18 is a block diagram illustrating an electromagnetic completion signal transmitter forming a part of the gravity corrected scale;
Fig. 19 is a block diagram illustrating an electromagnetic completion signal receiver forming a part of the gravity correction indicator; and

Fig. 20 is a block diagram illustrating an electromagnetic correction signal transmitter forming a part of the gravity correction indicator.

## Description of the Preferred Embodiment:

Now, an embodiment of the present invention will be described with reference to the accompanying drawings. In this connection, it is noted that main description is made with reference to a gravity corrected scale system, which also includes description of a gravity corrected scale and a gravity correction indicator according to the present invention.

First of all, a configuration of the gravity corrected scale system of the present invention will be described in more detail.

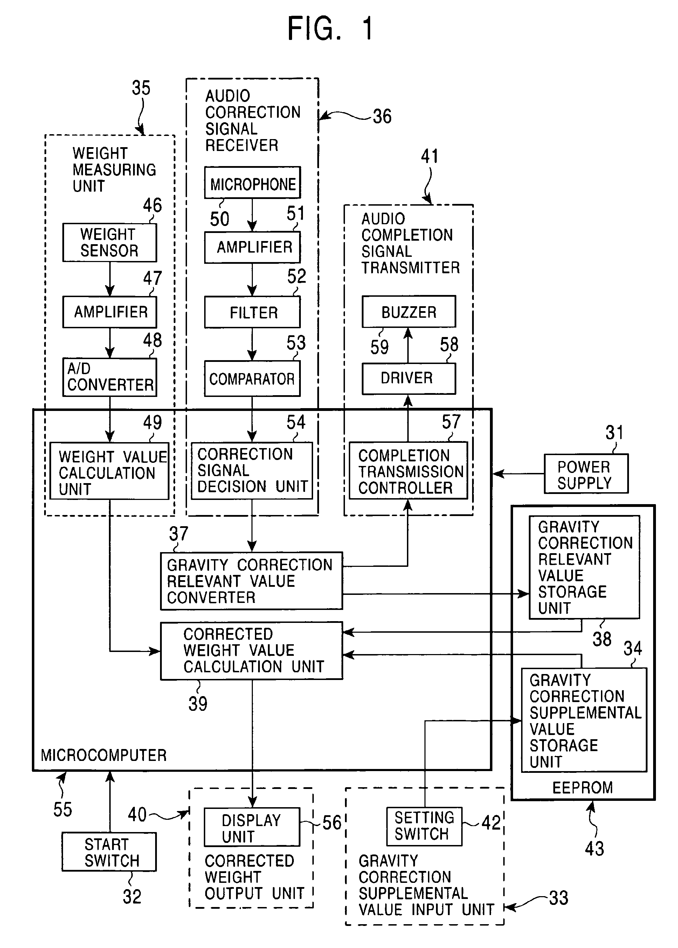

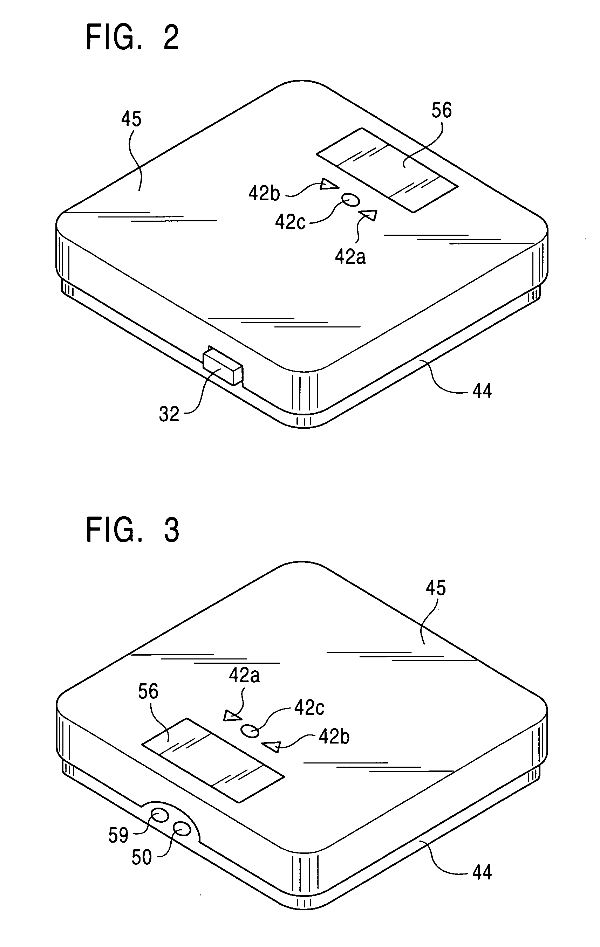

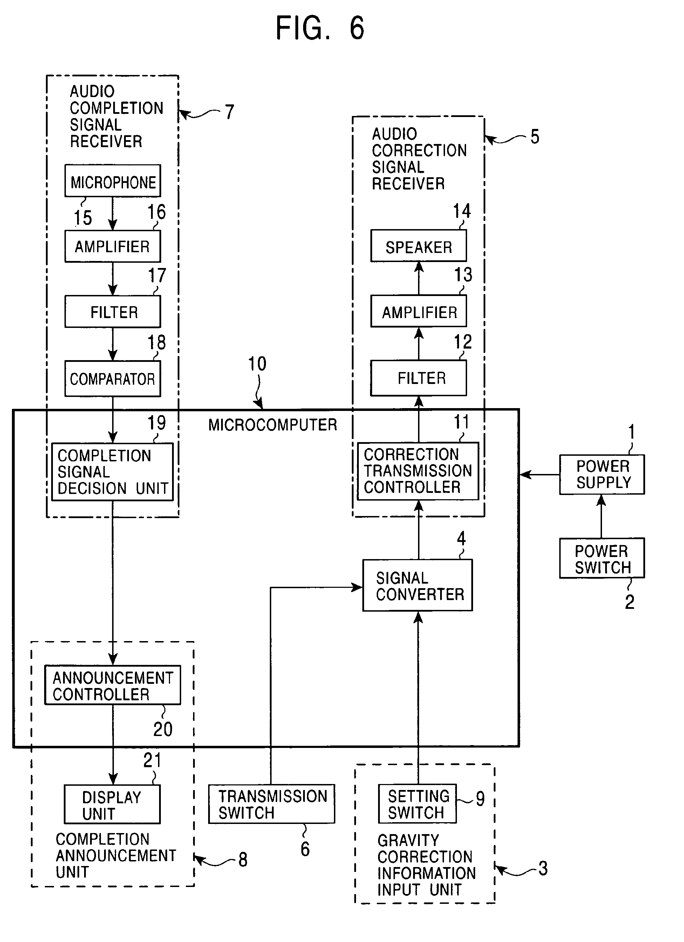

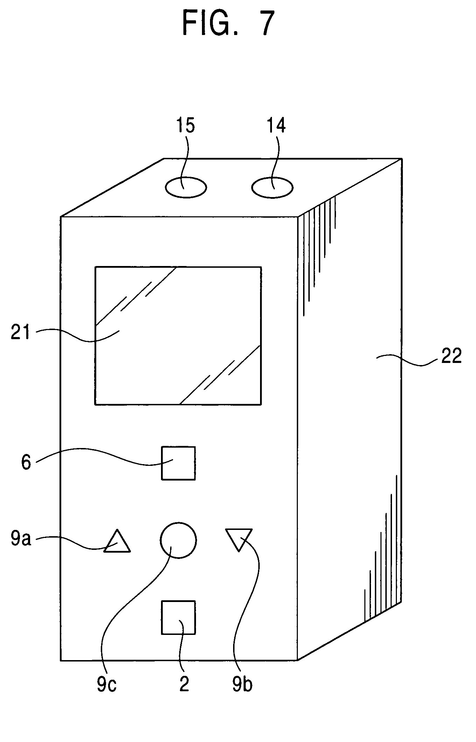

The gravity corrected scale system of the present invention comprises the gravity corrected scale of the present invention and the gravity correction indicator of the present invention. An external appearance of the gravity corrected scale can be seen in Figs. 2 and 3, and a configuration thereof can be seen in Fig. 1. In addition, an external appearance of the gravity correction indicator can be seen in Fig. 7, and a configuration thereof can be seen in Fig. 6.

The gravity correction indicator comprises a power supply 1, a power switch 2, a gravity correction information input unit 3, a signal converter 4, an audio correction signal transmitter 5, a transmission switch 6, an audio completion signal receiver 7, and a completion announcement unit 8, all contained in a case 22.

The power supply 1 is provided to supply electric power to each of portions of an electric system. The power switch 2 switches ON or OFF the power from the power supply 1 to each portion of the electric system.

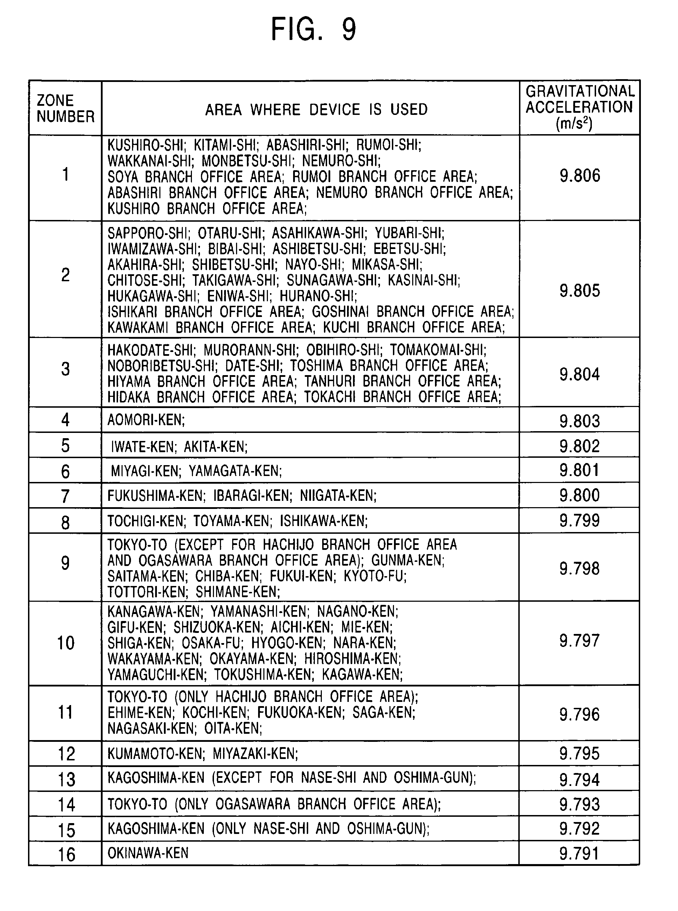

The gravity correction information input unit 3 includes a setting switch 9 made up of an "UP" button 9a, a "DOWN" button 9b and an "ENTER" button 9c, in order to input the information for gravity correction. More particularly, the UP button 9a scrolls up the gravity correction information while the DOWN button 9b scrolls down it. Then, the ENTER button 9c enters the gravity correction information selected by the UP or DOWN button 9a or 9b. In this connection, it is noted that the gravity correction information corresponds, for example, to "Zone Number" in a list of zones for gravity correction, as shown in Fig. 9 (in this list whole area (or Japan) where the gravity corrected scale is to be used is divided into 16 zones according to the magnitude of gravitational acceleration). Of course, the list of zones for gravity correction may include any additional zones of foreign country(s) or those of whole world. Alternatively, increased or decreased number of zones may be included in the list.

The signal converter 4 is made up of a microcomputer 10 for converting the gravity correction information entered by the input unit 3 into a gravity correction signal. In particular, the microcomputer 10 uses the gravity correction information entered by the ENTER button 9c to produce a binary coded signal for gravity correction. Assuming that "Zone Number 11" in the list of Fig. 9 is selected it is converted into "$1011_{(2)}$".

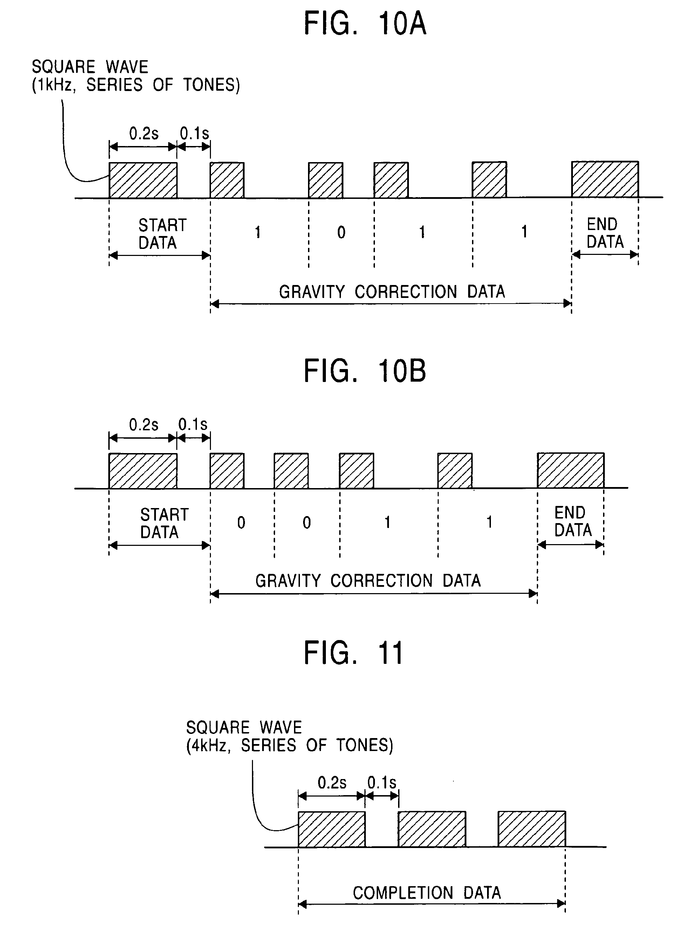

The audio correction signal transmitter 5 is made up of a correction transmission controller 11 (or the microcomputer 10), a filter 12, an amplifier 13 and a speaker 14, in order to transmit the gravity correction signal from the signal converter 4 as an audio signal. More particularly, the correction transmission controller 11 (or the microcomputer 10) receives the binary coded signal for gravity correction from the signal converter 4 and performs transmission control to output a square wave signal having pattern, as shown in Fig. 10. For example, if the gravity correction signal in the form of "$1011_{(2)}$" is received, then, as shown in Fig. 10 (a) illustrating the case of "Zone Number 11" in the list of Fig. 9, the square wave signal (at 1kHz) having a sequence of tone for 0.2 sec, silence for 0.1 sec, tone for 0.1 sec, silence for 0.2 sec, tone for 0.1 sec, silence for 0.1 sec, tone for 0.1 sec, silence for 0.2 sec, tone for 0.1 sec, silence for 0.2 sec, and tone for 0.2 sec is output. A first portion of the sequence of tone for 0.2 sec and silence for 0.1 sec means the start data of the gravity correction signal. A last portion of the sequence of tone for 0.2 sec means the end data of the gravity correction signal. The bandwidth therebetween means the gravity correction data for the gravity correction signal. That is to say, a portion of tone for 0.1 sec and silence for 0.1 sec means "0" while a portion of tone for 0.1 sec and silence for 0.2 sec means "1". The filter 12 converts the square wave signal (at 1 kHz) from the correction transmission controller 11 (or the microcomputer 10) into a sinusoidal signal (at 1 kHz). Then, the amplifier 13 amplifies the converted sinusoidal signal (at 1 kHz). Finally, the speaker generates tone according to the amplified sinusoidal signal (at 1 kHz).

The transmission switch 6 causes the audio correction signal transmitter 5 to transmit the gravity correction signal from the signal converter 4.

The audio completion signal receiver 7 is made up of a microphone 15, an amplifier 16, a filter 17, a comparator 18 and a completion signal decision unit 19 (or the microcomputer 10), and receives the audio gravity correction completion signal from the audio completion signal transmitter 41 of the gravity corrected scale. More particularly, the microphone 15 receives tone and converts it into sinusoidal signal. The amplifier 16 amplifies the sinusoidal signal. The filter 17 passes therethrough only 4 kHz component of the amplified sinusoidal signal. The comparator 18 determines whether the 4 kHz sinusoidal component is present or not, and if so, produces a square wave output. The completion signal decision unit 19 (or the microcomputer 10) determines whether the square wave output of the comparator 18 is the gravity correction completion signal transmitted by the audio completion signal transmitter 41 of the gravity corrected scale. For example, if a square wave signal (at 4 kHz) having a sequence pattern of tone for 0.2 sec and silence for 0.1 sec repeated three times, as shown in Fig. 11, is received then it is determined that the gravity correction completion signal has been received.

The completion announcement unit 8 is made up of an announcement controller 20 (or the microcomputer 10) and a display unit 21, in order to announce completion of gravity correction after receiving the audio gravity correction completion signal by the audio completion signal receiver 7. More particularly, the announcement controller 20 (or the microcomputer 10) receives the gravity correction completion signal from the completion signal decision unit 19 (or the microcomputer 10) and displays the gravity correction completion information on the display unit 21 informing that the gravity correction for the gravity corrected scale has been completed. The display unit 21 displays the gravity correction completion information under the control of the announcement controller 20.

The gravity corrected scale comprises a power supply 31, a start switch 32, a gravity correction supplemental value input unit 33, a gravity correction supplemental value storage unit 34, a weight measuring unit 35, an audio correction signal receiver 36, a gravity correction relevant value converter 37, a gravity correction relevant value storage unit 38, a corrected weight value calculation unit 39, a corrected weight value output unit 40, and an audio completion signal transmitter 41, all mounted to a base 44 and a platform 45.

The power supply 31 is made up of a dry-cell battery which can supply electric power to each of portions of an electric system immediately after it is set. The start switch 32 initializes the operation of the weight measuring unit 35 (or resets it to zero).

The gravity correction supplemental value input unit 33 includes a setting switch 42 made up of an "UP" button 42a, a "DOWN" button 42b and an "ENTER" button 42c, in order to input the supplemental value for gravity correction. More particularly, the UP button 42a scrolls up the supplemental values for gravity correction while the DOWN button 42b scrolls down them. Then, the ENTER button 42c enters the supplemental value for gravity correction selected by the UP or DOWN button 42a or 42b. The supplemental value for gravity correction is, here, defined as the gravitational acceleration at the location where the weight measuring unit 35 is adjusted.

The gravity correction supplemental value storage unit 34 includes an EEPROM (Electrically Erasable Programmable Read Only Memory) 43 which stores the supplemental value for gravity correction entered by the gravity correction supplemental value input unit 33. More specifically, it stores the gravitational acceleration at the location where the weight measuring unit 35 is adjusted, which is entered by the ENTER button 42c.

The weight measuring unit 35 is made up of a weight sensor 46, an amplifier 47, an A/D converter 48, and a weight value calculation unit 49 (or a microcomputer 55), in order to provide a weight value by measuring an object to be measured. More particularly, as in the prior art weight meter technique, the weight sensor 46 provided between the base 44 and the platform 45 acts to detect any load applied onto the platform 45. The detected load signal is amplified via the amplifier 47 and converted in the A/D converter 48 into a digital signal, which is then sent to the weight value calculation unit 49 for deriving a weight value.

The audio correction signal receiver 36 is made up of a microphone 50, an amplifier 51, a filter 52, a comparator 53 and a correction signal decision unit 54 (or the microcomputer 55), and receives the audio gravity correction signal from the audio correction signal transmitter 5 of the gravity correction indicator. More particularly, the microphone 50 receives tone and converts it into sinusoidal signal. The amplifier 51 amplifies the sinusoidal signal. The filter 52 passes therethrough only 1 kHz component of the amplified sinusoidal signal. The comparator 53 determines whether the 1 kHz sinusoidal component is present or not, and if so, produces a square wave output (at 1 kHz). The correction signal decision unit 54 (or the microcomputer 55) determines whether the square wave output from the comparator 53 is a square wave signal (at 1 kHz) having pattern, as shown in Fig. 10, which is sent by the audio correction signal transmitter 5 of the gravity correction indicator. For example, if the audio signal is received in a sequence of tone for 0.2 sec, silence for 0.1 sec, tone for 0.1 sec, silence for 0.2 sec, tone for 0.1 sec, silence for 0.1 sec, tone for 0.1 sec, silence for 0.2 sec, tone for 0.1 sec, silence for 0.2 sec, and tone for 0.2 sec, as shown in Fig. 10 (a) illustrating the case of "Zone Number 11" in the list of Fig. 9, then, such signal is determined to be the gravity correction signal because the first portion of the sequence of tone for 0.2 sec and silence for 0.1 sec is the start data of the gravity correction signal and the last portion of the sequence of tone for 0.2 sec is the end data of the gravity correction signal.

The gravity correction relevant value converter 37 includes the microcomputer 55 for converting the gravity correction signal received by the audio correction signal receiver 36 into a gravity correction relevant value. More particularly, conversion of the gravity correction signal into the gravity correction relevant value is performed according to such portion of the gravity correction data that has the pattern of square wave (at 1 kHz), as shown in Figs. 10A and 10B, on the basis of which it is determined to be the gravity correction signal in the correction signal decision unit 54 (or the microcomputer 55). For example, if the portion of the gravity correction data has the sequence of tone for 0.1 sec, silence for 0.2 sec, tone for 0.1 sec, silence for 0.1 sec, tone for 0.1 sec, silence for 0.2 sec, tone for 0.1 sec, and silence for 0.2 sec, as shown in Fig. 10A, the signal is converted into the zone number which is "11" in this example.

Then, this zone number "11" is further converted into the associated gravitational acceleration of 9.796 which is used as the gravity correction relevant value.

The gravity correction relevant value storage unit 38 includes an EEPROM 43 for storing the gravity correction relevant value sent from the gravity correction relevant value converter 37. In particular, the gravity correction relevant value storage unit 38 stores the gravitational acceleration corresponding to the zone number which is derived by the gravity correction relevant value converter 37 (or the microcomputer 55).

The corrected weight value calculation unit 39 calculates the corrected weight value by correcting the weight value (or measured weight) provided by the weight measuring unit 35 based on the gravity correction relevant value stored in the gravity correction relevant value storage unit 38 and the gravity correction supplemental value stored in the gravity correction supplemental value storage unit 34. More particularly, the gravitational acceleration corresponding to the zone number of the area where the device is used and the gravitational acceleration for the location where adjustment is made, both stored in EEPROM 43, as well as the weight value (or measured weight) calculated by the weight value calculation unit 49 are substituted for terms of the following formula 1 to derive the corrected weight value.

$$\text{Corrected Weight Value} = (\text{Measured Weight}) \times (\text{Gravitational Acceleration for}$$

$$\text{Zone Number of Area where Device is used}) \div (\text{Gravitational Acceleration for}$$

$$\text{Location where Adjustment is made}) \tag{1}$$

The corrected weight output unit 40 includes a display unit 56 for displaying the corrected weight value calculated by the corrected weight value calculation unit 39.

The audio completion signal transmitter 41 includes a completion transmission controller 57 (or the microcomputer 55), a driver 58 and a buzzer 59, and transmits an audio gravity correction completion signal after receiving the audio gravity correction signal by the audio correction signal receiver 36. More particularly, the completion transmission controller 57 (or the microcomputer 55) transmits the gravity correction completion signal having square wave pattern, as shown in Fig. 11, in response to conversion of the audio gravity correction signal into the gravity correction relevant value in the gravity correction relevant value converter 37. The gravity correction completion signal is a square wave signal (at 4 kHz) having a sequence pattern of tone for 0.2 sec and silence for 0.1 sec repeated three times, as shown in Fig. 11, for example. The driver 58 amplifies the gravity correction completion signal from the completion transmission controller 57 (or the microcomputer 55). The buzzer 59 sounds a tone (at 4 kHz) as the gravity correction completion signal in response to the amplified gravity correction completion signal from the driver 58.

Now, an operation of the gravity corrected scale system according to the present invention will be described in more detail.

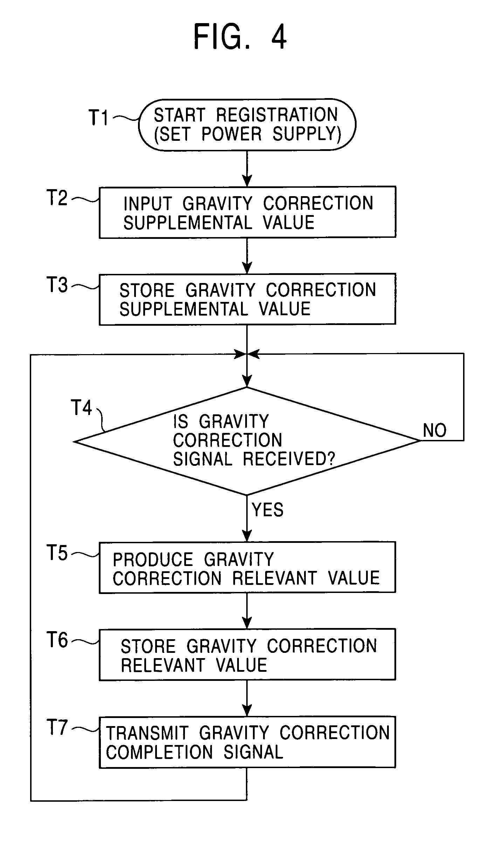

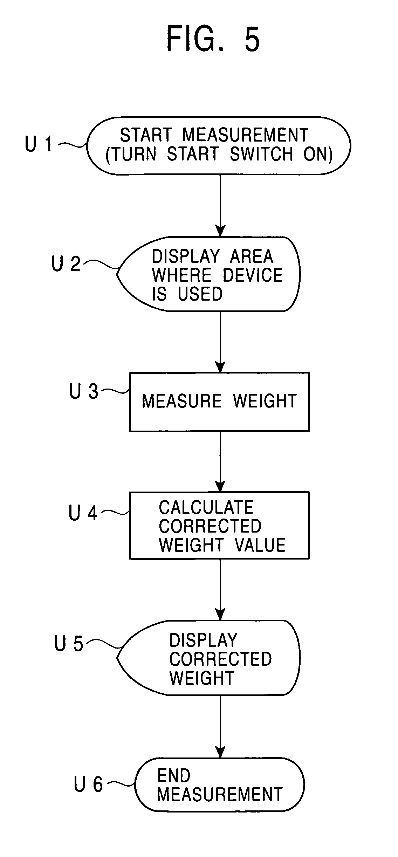

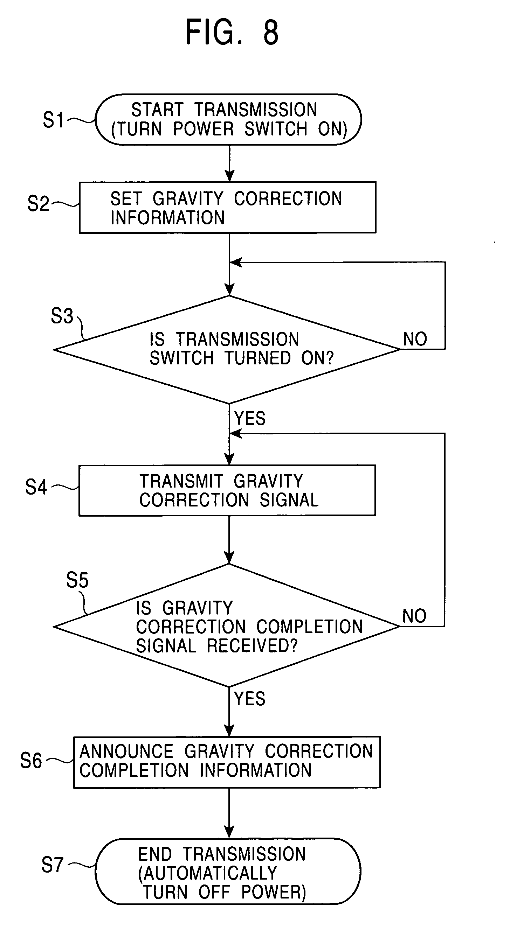

For operation of the gravity corrected scale, reference is made to Fig. 4 that is a flow chart illustrating process of registration of gravity correction relevant value and to Fig. 5 that is a flow chart illustrating process of weight measurement and gravity correction. For operation of the gravity correction indicator, reference is made to Fig. 8 that is a flow chart illustrating process of transmission of gravity correction information.

Referring to Fig. 8, the gravity correction indicator is started by turning ON the power switch 2 for supplying electric power to each of portions in the electric system from the power supply 1 (at Step S 1).

Then, the UP button 9a or the DOWN button 9b scrolls to select one of the zone numbers in the list of zones for gravity correction, as shown in Fig. 9. It is assumed, here, that Zone Number "11" is selected. Then, the selected zone number is entered by depression of the ENTER button 9c and it is converted into a binary coded number of "$1011_{(2)}$", for example, in the signal converter 4 (or the microcomputer 10) (at Step S2).

Thereafter, the microcomputer 10 determines whether the transmission switch 6 is turned ON or not (at Step S3).

If not (i.e. answer of Step S3 is NO), the operation is repeated until the transmission switch 6 is turned ON. But, if so (i.e. answer of Step S3 is YES), the audio correction signal transmitter 5 transmits the audio gravity correction signal (at Step S4). In particular, the correction transmission controller 11 (or the microcomputer 10) controls the signal converter 4 to output the binary coded ("$1011_{(2)}$", for example) gravity correction signal (that has the pattern of square wave (at 1kHz) in the sequence of tone for 0.2 sec, silence for 0.1 sec, tone for 0.1 sec, silence for 0.2 sec, tone for 0.1 sec, silence for 0.1 sec, tone for 0.1 sec, silence for 0.2 sec, tone for 0.1 sec, silence for 0.2 sec, and tone for 0.2 sec, as shown in Fig. 10 (a), for example). Next, in response thereto, the filter 12 converts the square wave (at 1kHz) into a sinusoidal signal (at 1kHz) which is then amplified by the amplifier 13, and thereafter, the speaker 14 sounds a tone according to the sinusoidal signal (at 1kHz).

Then, the microphone 15 receives the tone and converts it into sinusoidal signal. The amplifier 16 amplifies the sinusoidal signal. The filter 17 passes therethrough only 4 kHz component of the amplified sinusoidal signal. The comparator 18 determines whether the 4 kHz sinusoidal component is present or not, and if so, produces a square wave signal (at 4kHz) which is sent to the completion signal decision unit 19 (or the microcomputer 10). Then, the completion signal decision unit 19 (or the microcomputer 10) determines whether the square wave signal is the gravity correction completion signal (having, e.g. a square wave pattern (at 4kHz) in the sequence of tone for 0.2 sec and silence for 0.1 sec repeated three times, as shown in Fig. 11) transmitted by the audio completion signal transmitter 41 of the gravity corrected scale (at Step S5).

If not (i.e. answer of Step S5 is NO), the routine returns to Step S4 for repeating the process. But, if so (i.e. answer of Step S5 is YES), the display unit 21 displays some gravity correction completion information (e.g. a message saying that "Adjustment has been done such that gravity correction is normally effected") under the control of the announcement controller 20 (at Step S6).

Thereafter, the gravity correction indicator is automatically turned OFF to end the operation thereof (at Step S7).

Referring to Fig. 4, the gravity corrected scale is started by setting a dry-cell battery for supplying electric power to each of portions of the electric system (at Step T1).

Then, the UP button 42a or the DOWN button 42b scrolls to select the gravity correction supplemental value (e.g. gravitational acceleration for location where the adjustment of the weight measuring unit 35 is made), and the ENTER button 42c enters the selected gravity correction supplemental value (at Step T2), which selected supplemental value is, then, stored in the EEPROM 43 (at Step T3).

Thereafter, the microphone 50 receives tone and converts it into sinusoidal signal. The amplifier 51 amplifies the sinusoidal signal. The filter 52 passes therethrough only 1 kHz component of the amplified sinusoidal signal. The comparator 53 determines whether the 1 kHz sinusoidal component is present or not, and if so, produces a square wave signal (at 1 kHz) to the correction signal decision unit 54 (or the microcomputer 55). Then, the correction signal decision unit 54 (or the microcomputer 55) determines whether the square wave signal is a gravity correction signal (having e.g. a square wave pattern (at 1kHz) in a sequence of tone for 0.2 sec, silence for 0.1 sec, tone for 0.1 sec, silence for 0.2 sec, tone for 0.1 sec, silence for 0.1 sec, tone for 0.1 sec, silence for 0.2 sec, tone for 0.1 sec, silence for 0.2 sec, and tone for 0.2 sec, as shown in Fig. 10 (a)) sent by the audio correction signal transmitter 5 of the gravity correction indicator (at Step T4).

If not (i.e. answer of Step T4 is NO), the process of Step T4 is repeated. But, if so (i.e. answer of Step T4 is YES), the gravity correction relevant value converter 37 (or the microcomputer 55) converts the gravity correction signal into an gravity correction relevant value (e.g. gravitational acceleration of 9.796 corresponding to zone number "11" if the portion of the gravity correction data is in the sequence of tone for 0.1 sec, silence for 0.2 sec, tone for 0.1 sec, silence for 0.1 sec, tone for 0.1 sec, silence for 0.2 sec, tone for 0.1 sec, and silence for 0.2 sec, as shown in Fig. 10A) (at Step T5), which relevant value is, the, stored in the EEPROM 43 (at Step T6).

Next, the audio completion signal transmitter 41 transmits an audio gravity correction signal (at Step T7). More particularly, in response to conversion of the audio gravity correction signal into the gravity correction relevant value in the gravity correction relevant value converter 37, the completion transmission controller 57 (or the microcomputer 55) controls to transmit the gravity correction completion signal (e.g. a square wave signal (at 4 kHz) in the sequence of tone for 0.2 sec and silence for 0.1 sec repeated three times, as shown in Fig. 11). Then, the driver 58 amplifies the gravity correction completion signal, and the buzzer 59 sounds a tone according to the amplified gravity correction completion signal.

After Step T7 the routine returns to Step T4 to repeat the process. Therefore, registration of the gravity correction relevant value is kept up datable.

Referring to Fig. 5, the gravity corrected scale is started by turning ON the start switch 32 for initializing (or resetting) the weight measuring unit 35 (at Step U1).

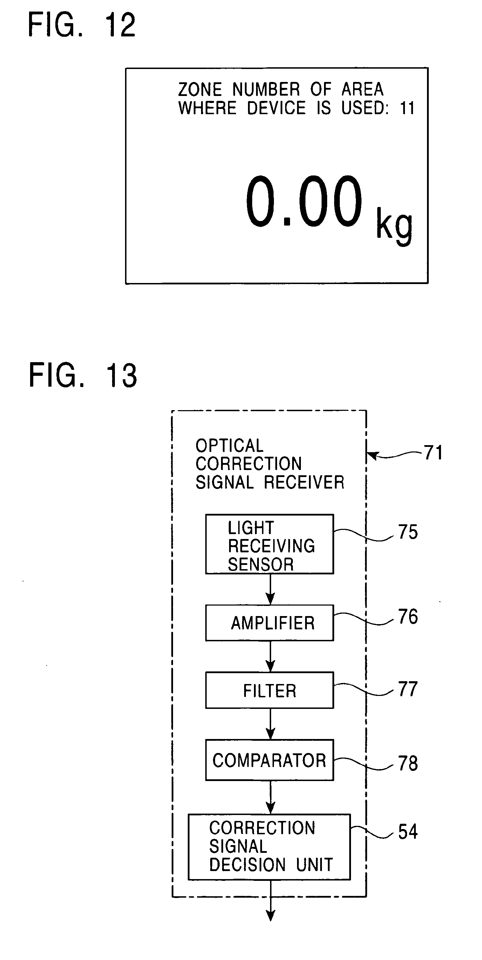

Then, as shown in Fig. 12, the display unit 21 displays the weight value and the zone number of the area where the device is to be used (at Step U2). Because of display of the zone number that has been set according to the gravity correction signal received at Step T4, as described above, the user can know the area where the gravity corrected scale can act to precisely measure the weight.

Next, as in the case of the prior art weight meter, the weight sensor 46 between the base 44 and the platform 45 detects the load applied to the platform 45, the signal of which is amplified by the amplifier 47 and converted into a digital signal in the A/D converter 48. Thereafter, in response thereto, the weight value calculation unit 49 produces the weight value (at Step U3).

Then, the corrected weight value calculation unit 39 substitutes the gravitational acceleration (e.g. 9.796 m/$s^2$) corresponding to the zone number of the area where the device is used and the gravitational acceleration (e.g. 9.802 m/$s^2$) for the location where adjustment is made, both stored in EEPROM 43, as well as the weight value (e.g. 60.00 kg) calculated by the weight value calculation unit 49 for terms of the formula 1 to derive the corrected weight value (e.g. 59.96 kg) (at Step U4).

Next, the display unit 21 displays the corrected weight value (e.g. 59.96 kg) (at Step U5), and then, the process of weight measurement and gravity correction is ended (at Step U6).

In the embodiment as above the gravity corrected scale system has been described wherein the audio signal is used to communicate between the gravity correction indicator and the gravity corrected scale without any physical contact therebetween. Alternatively, another embodiment may be possible wherein an optical or electromagnetic signal is used for communication.

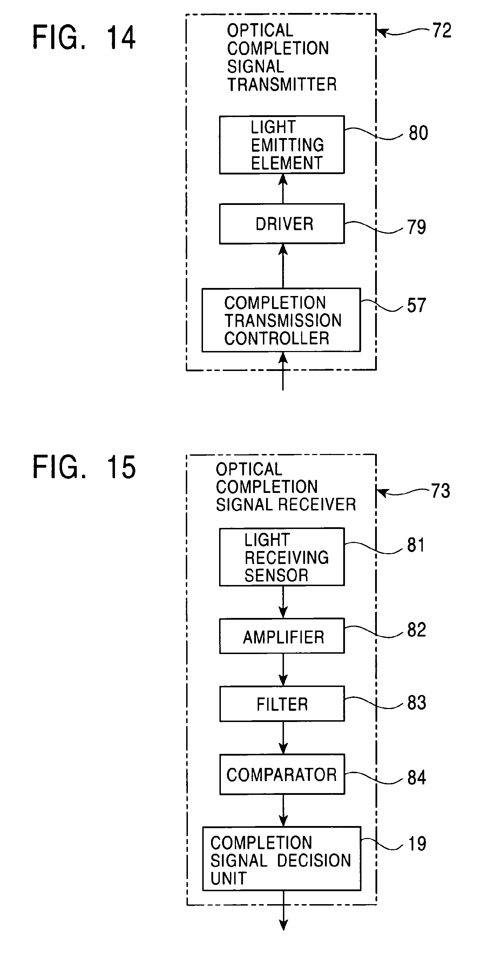

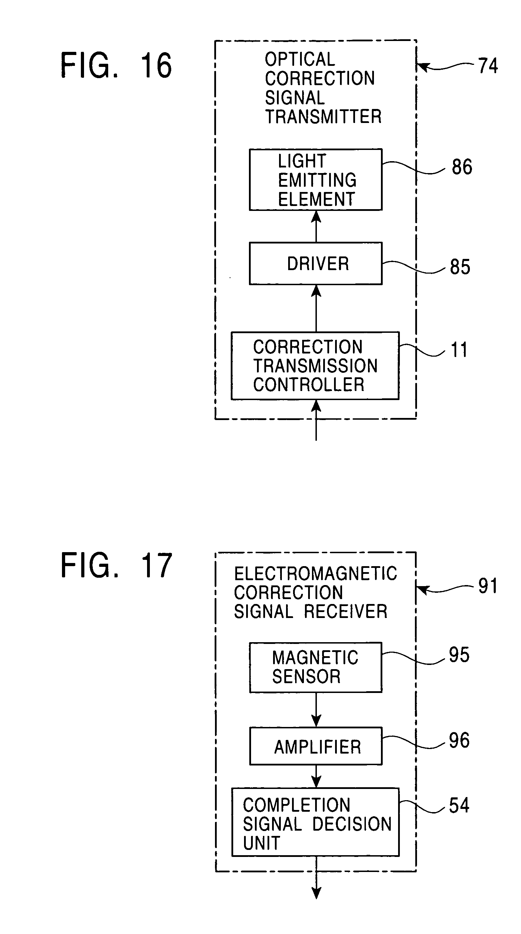

In the embodiment of the gravity corrected scale system wherein the optical signal is used for communication the audio correction signal receiver 36 and the audio completion signal transmitter 41 in the gravity corrected scale in Fig. 1 are replaced by an optical correction signal receiver 71 in Fig. 13 and an optical completion signal transmitter 72 in Fig. 14, respectively; and furthermore, the audio completion signal receiver 7 and the audio correction signal transmitter 5 in the gravity correction indicator in Fig. 6 are replaced by an optical completion signal receiver 73 in Fig. 15 and an optical correction signal transmitter 74 in Fig. 16, respectively.

The optical correction signal receiver 71 includes a light receiving sensor 75, an amplifier 76, a filter 77, a comparator 78 and the correction signal decision unit 54 (or the microcomputer 55), in order to receive an optical gravity correction signal sent by the optical correction signal transmitter 74 of the gravity correction indicator. More particularly, the light receiving sensor 75 receives light to produce an electrical signal which is, then, processed in the amplifier 76, the filter 77, the comparator 78 and the correction signal decision unit 54 (or the microcomputer 55) in the same manner as that of the audio correction signal receiver 36, as described above.

The optical completion signal transmitter 72 includes the completion transmission controller 57 (or the microcomputer 55), a driver 79 and a light emitting element 80, in order to transmit an optical gravity correction completion signal after receiving an optical gravity correction signal by the optical correction signal receiver 71. More particularly, the completion transmission controller 57 (or the microcomputer 55) operates in the same manner as that of the audio completion signal transmitter 41, the driver 79 amplifies the gravity correction completion signal from the completion transmission controller 57 (or the microcomputer 55), and the light emitting element 80 generates an optical gravity correction completion signal according to the amplified gravity correction completion signal from the driver 79.

The optical completion signal receiver 73 includes a light receiving sensor 81, an amplifier 82, a filter 83, a comparator 84 and the completion signal decision unit 19 (or the microcomputer 10), in order to receive an optical gravity correction completion signal sent by the optical completion signal transmitter 72 of the gravity corrected scale. More particularly, the light receiving sensor 81 receives light to produce an electrical signal which is, then, processed in the amplifier 82, the filter 83, the comparator 84 and the completion signal decision unit 19 (or the microcomputer 10) in the same manner as that of the audio completion signal receiver 7, as described above.

The optical correction signal transmitter 74 includes the correction transmission controller 11 (or the microcomputer 10), a driver 85 and a light emitting element 86, in order to transmit the gravity correction signal from the signal converter 4 as an optical signal. More particularly, the correction transmission controller 11 (or the microcomputer 10) operates in the same manner as that of the audio correction signal transmitter 5, the driver 85 amplifies the gravity correction signal from the correction transmission controller 11 (or the microcomputer 10), and the light emitting element 86 generates an optical gravity correction signal according to the amplified gravity correction signal from the driver 85.

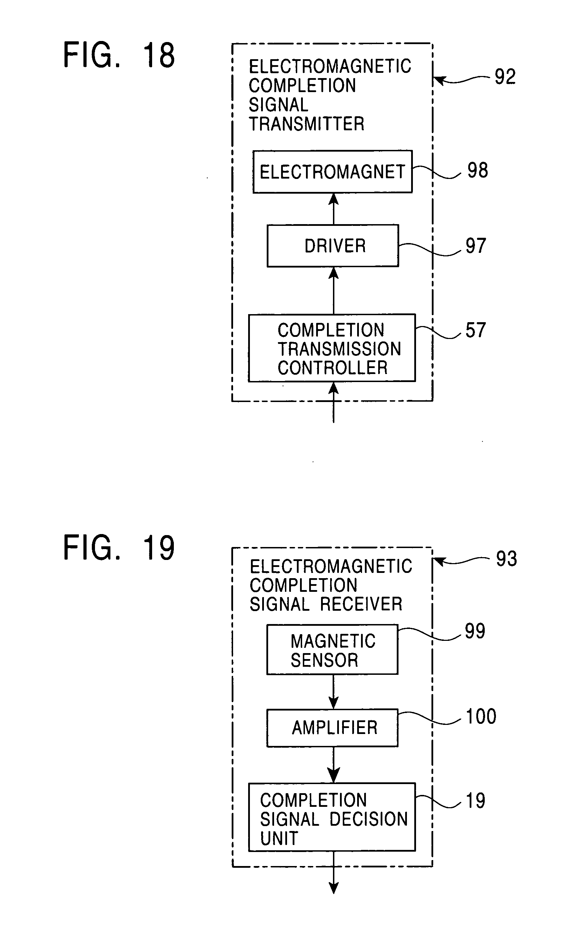

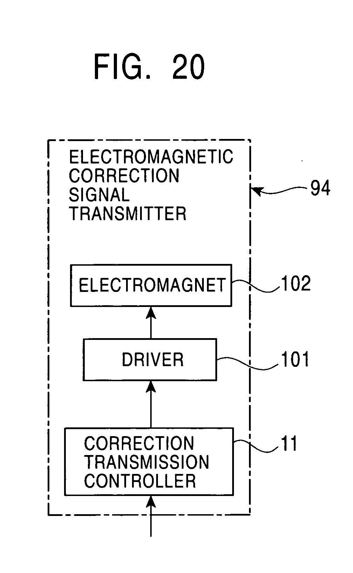

In the embodiment of the gravity corrected scale system wherein the electromagnetic signal is used for communication the audio correction signal receiver 36 and the audio completion signal transmitter 41 in the gravity corrected scale in Fig. 1 are replaced by an electromagnetic correction signal receiver 91 in Fig. 17 and an electromagnetic completion signal transmitter 92 in Fig. 18, respectively; and furthermore, the audio completion signal receiver 7 and the audio correction signal transmitter 5 in the gravity correction indicator in Fig. 6 are replaced by an electromagnetic completion signal receiver 93 in Fig. 19 and an electromagnetic correction signal transmitter 94 in Fig. 20, respectively.

The electromagnetic correction signal receiver 91 includes a magnetic sensor 95, an amplifier 96, and the correction signal decision unit 54 (or the microcomputer 55), in order to receive an electromagnetic gravity correction signal sent by the electromagnetic correction signal transmitter 94 of the gravity correction indicator. More particularly, the magnetic sensor 95 receives electromagnetic field to produce an electrical signal which is, then, amplified in the amplifier 96, and the correction signal decision unit 54 (or the microcomputer 55) operates to process the amplified signal in the same manner as that of the audio correction signal receiver 36, as described above.

The electromagnetic completion signal transmitter 92 includes the completion transmission controller 57 (or the microcomputer 55), a driver 97 and an electromagnet 98, in order to transmit an electromagnetic gravity correction completion signal after receiving an electromagnetic gravity correction signal by the electromagnetic correction signal receiver 91. More particularly, the completion transmission controller 57 (or the microcomputer 55) and the driver 97 operate in the same manner as that of the audio completion signal transmitter 41, and the electromagnet 98 generates an electromagnetic gravity correction completion signal according to the amplified gravity correction completion signal from the driver 97.

The electromagnetic completion signal receiver 93 includes a magnetic sensor 99, an amplifier 100, and the completion signal decision unit 19 (or the microcomputer 10), in order to receive an electromagnetic gravity correction completion signal sent by the electromagnetic completion signal transmitter 92 of the gravity corrected scale. More particularly, the magnetic sensor 99 receives electromagnetic field to produce an electrical signal which is, then, amplified in the amplifier 100, and the completion signal decision unit 19 (or the microcomputer 10) operates to process the amplified signal in the same manner as that of the audio completion signal receiver 7, as described above.

The electromagnetic correction signal transmitter 94 includes the correction transmission controller 11 (or the microcomputer 10), a driver 101 and an electromagnet 102, in order to transmit the gravity correction signal from the signal converter 4 as an electromagnetic signal. More particularly, the correction transmission controller 11 (or the microcomputer 10) operates in the same manner as that of the audio correction signal transmitter 5, the driver 101 amplifies the gravity correction signal from the correction transmission controller 11 (or the microcomputer 10), and the electromagnet 102 transmits an electromagnetic gravity correction signal according to the amplified gravity correction signal.

In the embodiments as above, the present invention has been described as having such configuration that the zone number of the area where the device (i.e. gravity corrected scale) is used is entered as the gravity correction information via the gravity correction information input unit 3 of the gravity correction indicator, the information is converted into the gravity correction relevant value, i.e. gravitational acceleration for that area, by the gravity correction relevant value converter 37 of the gravity corrected scale, and it is stored in the gravity correction relevant value storage unit 38. The present invention, however, is not limited to such configuration, but, may be embodied in many other ways. For example, additional information that can specify the gravitational acceleration or the area where the device is used, such as phone number, zip code, address, longitude, latitude, name of prefecture, city, town and village, may be entered via the gravity correction information input unit 3 as the gravity correction information. Then, such additional information may be converted into the gravitational acceleration for that area by the gravity correction relevant value converter 37, and thereafter, it may be stored in the gravity correction relevant value storage unit 38.

Furthermore, in the embodiments as above, the present invention has been described as having such configuration that the zone number of the area where the device is used is entered as the gravity correction information via the gravity correction information input unit 3 of the gravity correction indicator, the information is converted into the gravity correction relevant value, i.e. gravitational acceleration for that area, by the gravity correction relevant value converter 37 of the gravity corrected scale, the gravitational acceleration is stored in the gravity correction relevant value storage unit 38, the information of location where adjustment of the weight measuring unit 35 is made is entered as the gravity correction supplemental value via the gravity correction supplemental value input unit 33, the gravitational acceleration for such location is stored in the gravity correction supplemental value storage unit 34, and the corrected weight value calculation unit 39 calculates the corrected weight value by correcting the weight value provided by the weight measuring unit 35 based on the gravitational acceleration for the area where the device is used and on the gravitational acceleration for the location where adjustment of the weight measuring unit 35 is made. The present invention, however, is not limited to such configuration, but, may be embodied in many other ways. For example, the gravity correction relevant value converter 37 may act to substitute the gravitational acceleration for the area where the gravity corrected scale is used, as received from the correction signal decision unit 54, and the gravitational acceleration for the location where adjustment of the weight measuring unit 35 is made for terms of the following formula 2 to convert them into a gravity correction coefficient that is the gravity correction relevant value. Then, the gravity correction coefficient may be stored in the gravity correction relevant value storage unit 38, and thereafter, the corrected weight value calculation unit 39 may calculate the corrected weight value by correcting the weight value (measured weight value) provided by the weight measuring unit 35 based on the gravity correction coefficient stored in the storage unit 38 according to the following formula 3.

$$\text{Gravity Correction Coefficient} = (\text{Gravitational Acceleration for Area where}$$

$$\text{Device is used}) \div (\text{Gravitational Acceleration for Location where Adjustment}$$

$$\text{is made}) \qquad (2)$$

$$\text{Corrected Weight Value} = (\text{Measured Weight Value}) \times (\text{Gravity Correction}$$

$$\text{Coefficient}) \qquad (3)$$

In the embodiments of the gravity corrected scale system, as described above, the gravity correction information is entered via the gravity correction information input unit 3 of the gravity correction indicator, the gravity correction information is converted into the gravity correction signal by the signal converter 4, the gravity correction signal is transmitted as an audio signal (or an optical signal or an electromagnetic signal) by the audio correction signal transmitter 5 (or the optical correction signal transmitter 74 or the electromagnetic correction signal transmitter 94), the audio (or the optical or the electromagnetic) gravity correction signal is received by the audio correction signal receiver 36 (or the optical correction signal receiver 71 or the electromagnetic correction signal receiver 91) of the gravity corrected scale which is in non-physical contact with the gravity correction indicator, the audio (or the optical or the electromagnetic) gravity correction signal is converted into the gravity correction relevant value by the gravity correction relevant value converter 37, the gravity correction relevant value is stored in the gravity correction relevant value storage unit 38, the weight value of the object to be measured is measured by the weight measuring unit 35, and the measured weight value is corrected by the corrected weight value calculation unit 39 based on the gravity correction relevant value preliminary stored in order to derive the corrected weight value. Accordingly, the wholesale dealers and retail stores can conduct gravity correction for each of gravity corrected scale products in packaged condition for sale to end users (but, for a gravity corrected scale product having an optical correction signal receiver 71 a clear window is necessary for passing light), at the place in front of the store or within the warehouses, according to the area where the product is used by the end user, without any need of unpacking the product.

Furthermore, in the embodiments of the gravity corrected scale system, as described above, after transmitting the audio (or the optical or the electromagnetic) gravity correction signal by the audio correction signal transmitter 5 (or the optical correction signal transmitter 74 or the electromagnetic correction signal transmitter 94) of the gravity correction indicator, the audio (or the optical or the electromagnetic) gravity correction signal is received by the audio correction signal receiver 36 (or the optical correction signal receiver 71 or the electromagnetic correction signal receiver 91) of the gravity corrected scale, the audio (or the optical or the electromagnetic) gravity correction completion signal is transmitted by the audio completion signal transmitter 41 (or the optical completion signal transmitter 72 or the electromagnetic completion signal transmitter 92), the audio (or the optical or the electromagnetic) gravity correction completion signal is received by the audio completion signal receiver 7 (or the optical completion signal receiver 73 or the electromagnetic completion signal receiver 93) of the gravity correction indicator, and the gravity correction completion information is announced by the completion announcement unit 8. As the result, the user can know that the gravity correction has surely be done.

It is apparent from forgoing that a gravity correction indicator according to the present invention is advantageous in that an audio (or an optical or an electromagnetic) correction signal transmitter can transmit a gravity correction information entered by a gravity correction information input unit to a gravity corrected scale without any physical contact therebetween and a use can know that the gravity correction information has been transmitted with the aid of a completion announcement unit.

Furthermore, the gravity corrected scale of the present invention is effective in that an audio (or an optical or an electromagnetic) correction signal receiver can receive the gravity correction signal without any physical contact so that the gravity correction for the weight value of an object to be measured as measured by the weight measuring unit can be made even in packaged condition.

Moreover, the gravity corrected scale system of the present invention is effective in that the wholesale dealers and retail stores can conduct gravity correction for each of gravity corrected scale products in packaged condition at the place in front of the store or within the warehouses, according to the area where the product is used by the end user, using the gravity correction indicator.

**Claims**

1. A gravity corrected scale comprising:

> a weight measuring unit (35);
> an audio correction signal receiver (36);
> a gravity correction relevant value converter (37);
> a gravity correction relevant value storage unit (38); and
> a corrected weight value calculation unit (39), wherein
> said weight measuring unit (35) provides a weight value by measuring an object to be measured,
> said audio correction signal receiver (36) receives an audio gravity correction signal,
> said gravity correction relevant value converter (37) converts the audio gravity correction signal received by
> said audio correction signal receiver (36) into a gravity correction relevant value,
> said gravity correction relevant value storage unit (38) stores the gravity correction relevant value converted
> by said gravity correction relevant value converter (37), and
> said corrected weight value calculation unit (39) calculates a corrected weight value by correcting the weight
> value provided by said weight measuring unit (35) based on the gravity correction relevant value stored in said
> gravity correction relevant value storage unit (38).

2. A gravity corrected scale according to claim 1 in which it further comprises an audio completion signal transmitter (41) which transmits an audio gravity correction completion signal after receiving the audio gravity correction signal by said audio correction signal receiver (36).

3. A gravity corrected scale comprising:

   a weight measuring unit (35);
   an optical correction signal receiver (71);
   a gravity correction relevant value converter (37);
   a gravity correction relevant value storage unit (38); and
   a corrected weight value calculation unit (39), wherein
   said weight measuring unit (35) provides a weight value by measuring an object to be measured,
   said optical correction signal receiver (71) receives an optical gravity correction signal,
   said gravity correction relevant value converter (37) converts the optical gravity correction signal received by said optical correction signal receiver (71) into a gravity correction relevant value,
   said gravity correction relevant value storage unit (38) stores the gravity correction relevant value converted by said gravity correction relevant value converter (37), and
   said corrected weight value calculation unit (39) calculates a corrected weight value by correcting the weight value provided by said weight measuring unit (35) based on the gravity correction relevant value stored in said gravity correction relevant value storage unit (38).

4. A gravity corrected scale according to claim 3 in which it further comprises an optical completion signal transmitter (72) which transmits an optical gravity correction completion signal after receiving the optical gravity correction signal by said optical correction signal receiver (71).

5. A gravity corrected scale comprising:

   a weight measuring unit (35);
   an electromagnetic correction signal receiver (91);
   a gravity correction relevant value converter (37);
   a gravity correction relevant value storage unit (38); and
   a corrected weight value calculation unit (39), wherein
   said weight measuring unit (35) provides a weight value by measuring an object to be measured,
   said electromagnetic correction signal receiver (91) receives an electromagnetic gravity correction signal,
   said gravity correction relevant value converter (37) converts the electromagnetic gravity correction signal received by said electromagnetic correction signal receiver (91) into a gravity correction relevant value,
   said gravity correction relevant value storage unit (38) stores the gravity correction relevant value converted by said gravity correction relevant value converter (37), and
   said corrected weight value calculation unit (39) calculates a corrected weight value by correcting the weight value provided by said weight measuring unit (35) based on the gravity correction relevant value stored in said gravity correction relevant value storage unit (38).

6. A gravity corrected scale according to claim 5 in which it further comprises an electromagnetic completion signal transmitter (92) which transmits an electromagnetic gravity correction completion signal after receiving the electromagnetic gravity correction signal by said electromagnetic correction signal receiver (91).

7. A gravity corrected scale according to any one of claims 1 to 6 in which it further comprises:

   a gravity correction supplemental value input unit (33); and
   a gravity correction supplemental value storage unit (34), wherein
   said gravity correction supplemental value input unit (33) enters a supplemental value for gravity correction, and
   said gravity correction supplemental value storage unit (34) stores the supplemental value for gravity correction entered by said gravity correction supplemental value input unit (33), and wherein
   said corrected weight value calculation unit (39) calculates the corrected weight value by correcting the weight value provided by said weight measuring unit (35) based on the gravity correction relevant value stored in said gravity correction relevant value storage unit (38) and the gravity correction supplemental value stored in said gravity correction supplemental value storage unit (34).

**8.** A gravity correction indicator comprising:

a gravity correction information input unit (3);
a signal converter (4); and
an audio correction signal transmitter (5), wherein
said gravity correction information input unit (3) enters information for gravity correction,
said signal converter (4) converts the information for gravity correction entered by said gravity correction information input unit (3) into a gravity correction signal, and
said audio correction signal transmitter (5) transmits the gravity correction signal converted by said signal converter (4) as audio signal.

**9.** A gravity correction indicator according to claim 8 in which it further comprises:

an audio completion signal receiver (7); and
a completion announcement unit (8), wherein
said audio completion signal receiver (7) receives an audio gravity correction completion signal after transmitting the audio gravity correction signal by said audio correction signal transmitter (5), and
said completion announcement unit (8) announces completion of gravity correction after receiving the audio gravity correction completion signal by said audio completion signal receiver (7).

**10.** A gravity correction indicator comprising:

a gravity correction information input unit (3);
a signal converter (4); and
an optical correction signal transmitter (74), wherein
said gravity correction information input unit (3) enters information for gravity correction,
said signal converter (4) converts the information for gravity correction entered by said gravity correction information input unit (3) into a gravity correction signal, and
said optical correction signal transmitter (74) transmits the gravity correction signal converted by said signal converter (4) as optical signal.

**11.** A gravity correction indicator according to claim 10 in which it further comprises:

an optical completion signal receiver (73); and
a completion announcement unit (8), wherein
said optical completion signal receiver (73) receives an optical gravity correction completion signal after transmitting the optical gravity correction signal by said optical correction signal transmitter (74), and
said completion announcement unit (8) announces completion of gravity correction after receiving the optical gravity correction completion signal by said optical completion signal receiver (73).

**12.** A gravity correction indicator comprising:

a gravity correction information input unit (3);
a signal converter (4); and
an electromagnetic correction signal transmitter (94), wherein
said gravity correction information input unit (3) enters information for gravity correction,
said signal converter (4) converts the information for gravity correction entered by said gravity correction information input unit (3) into a gravity correction signal, and
said electromagnetic correction signal transmitter (94) transmits the gravity correction signal converted by said signal converter (4) as electromagnetic signal.

**13.** A gravity correction indicator according to claim 12 in which it further comprises:

an electromagnetic completion signal receiver (93); and
a completion announcement unit (8), wherein
said electromagnetic completion signal receiver (93) receives an electromagnetic gravity correction completion signal after transmitting the electromagnetic gravity correction signal by said electromagnetic correction signal transmitter (94), and

said completion announcement unit (8) announces completion of gravity correction after receiving the electromagnetic gravity correction completion signal by said electromagnetic completion signal receiver (93).

14. A gravity corrected scale system comprising a gravity corrected scale according to claim 1 and a gravity correction indicator according to claim 8 wherein an audio gravity correction signal transmitted by an audio correction signal transmitter (5) of the gravity correction indicator is received by an audio correction signal receiver (36) of the gravity corrected scale.

15. A gravity corrected scale system according to claim 14 in which said gravity corrected scale further includes:

an audio completion signal transmitter (41) which transmits an audio gravity correction completion signal after receiving the audio gravity correction signal by said audio correction signal receiver (36),
said gravity correction indicator further includes:

an audio completion signal receiver (7) which receives an audio gravity correction completion signal after transmitting the audio gravity correction signal by said audio correction signal transmitter (5); and
a completion announcement unit (8) which announces completion of gravity correction after receiving the audio gravity correction completion signal by said audio completion signal receiver (7), and in which the audio gravity correction completion signal transmitted by said audio completion signal transmitter (41) is received by said audio completion signal receiver (7).

16. A gravity corrected scale system comprising a gravity corrected scale according to claim 3 and a gravity correction indicator according to claim 10 wherein an optical gravity correction signal transmitted by an optical correction signal transmitter (74) of the gravity correction indicator is received by an optical correction signal receiver (71) of the gravity corrected scale.

17. A gravity corrected scale system according to claim 16 in which said gravity corrected scale further includes:

an optical completion signal transmitter (72) which transmits an optical gravity correction completion signal after receiving the optical gravity correction signal by said optical correction signal receiver (71),
said gravity correction indicator further includes:

an optical completion signal receiver (73) which receives an optical gravity correction completion signal after transmitting the optical gravity correction signal by said optical correction signal transmitter (74); and
a completion announcement unit (8) which announces completion of gravity correction after receiving the optical gravity correction completion signal by said optical completion signal receiver (73), and in which the optical gravity correction completion signal transmitted by said optical completion signal transmitter (72) is received by said optical completion signal receiver (73).

18. A gravity corrected scale system comprising a gravity corrected scale according to claim 5 and a gravity correction indicator according to claim 12 wherein an electromagnetic gravity correction signal transmitted by an electromagnetic correction signal transmitter (94) of the gravity correction indicator is received by an electromagnetic correction signal receiver (91) of the gravity corrected scale.

19. A gravity corrected scale system according to claim 18 in which said gravity corrected scale further includes:

an electromagnetic completion signal transmitter (92) which transmits an electromagnetic gravity correction completion signal after receiving the electromagnetic gravity correction signal by said electromagnetic correction signal receiver (91),
said gravity correction indicator further includes:

an electromagnetic completion signal receiver (93) which receives an electromagnetic gravity correction completion signal after transmitting the electromagnetic gravity correction signal by said electromagnetic correction signal transmitter (94); and
a completion announcement unit (8) which announces completion of gravity correction after receiving the electromagnetic gravity correction completion signal by said electromagnetic completion signal receiver (93), and in which the electromagnetic gravity correction completion signal transmitted by said electromagnetic completion signal transmitter (92) is received by said electromagnetic completion signal receiver (93).

EP 1 413 859 A1

# FIG. 1

# FIG. 2

# FIG. 3

# FIG. 4

T1 — START REGISTRATION
(SET POWER SUPPLY)

T2 — INPUT GRAVITY CORRECTION
SUPPLEMENTAL VALUE

T3 — STORE GRAVITY CORRECTION
SUPPLEMENTAL VALUE

T4 — IS GRAVITY
CORRECTION
SIGNAL RECEIVED?    NO

YES

T5 — PRODUCE GRAVITY
CORRECTION RELEVANT VALUE

T6 — STORE GRAVITY CORRECTION
RELEVANT VALUE

T7 — TRANSMIT GRAVITY CORRECTION
COMPLETION SIGNAL

EP 1 413 859 A1

# FIG. 5

U1 — START MEASUREMENT
(TURN START SWITCH ON)

U2 — DISPLAY AREA
WHERE DEVICE
IS USED

U3 — MEASURE WEIGHT

U4 — CALCULATE
CORRECTED
WEIGHT VALUE

U5 — DISPLAY
CORRECTED
WEIGHT

U6 — END
MEASUREMENT

# FIG. 6

AUDIO
COMPLETION
SIGNAL
RECEIVER — 7

AUDIO
CORRECTION
SIGNAL
RECEIVER — 5

| MICROPHONE | 16 |

15

| AMPLIFIER | 17 |

14
| SPEAKER |

13
| AMPLIFIER |

| FILTER | 18 |

12
| FILTER |

| COMPARATOR |

10

MICROCOMPUTER

| COMPLETION
SIGNAL
DECISION UNIT | 19 |

11
| CORRECTION
TRANSMISSION
CONTROLLER |

1
| POWER
SUPPLY |

4
| SIGNAL
CONVERTER |

| POWER
SWITCH |

2

| ANNOUNCEMENT
CONTROLLER |

20

21
| DISPLAY
UNIT |

| TRANSMISSION
SWITCH |

9
| SETTING
SWITCH |

COMPLETION
ANNOUNCEMENT
UNIT — 8

6

GRAVITY
CORRECTION
INFORMATION
INPUT UNIT — 3

21

# FIG. 7

# FIG. 8

S1 — START TRANSMISSION
(TURN POWER SWITCH ON)

S2 — SET GRAVITY CORRECTION
INFORMATION

S3 — IS TRANSMISSION
SWITCH TURNED ON? — NO

YES

S4 — TRANSMIT GRAVITY
CORRECTION SIGNAL

S5 — IS GRAVITY
CORRECTION COMPLETION
SIGNAL RECEIVED? — NO

YES

S6 — ANNOUNCE GRAVITY CORRECTION
COMPLETION INFORMATION

S7 — END TRANSMISSION
(AUTOMATICALLY
TURN OFF POWER)

# FIG. 9

| ZONE NUMBER | AREA WHERE DEVICE IS USED | GRAVITATIONAL ACCELERATION ($m/s^2$) |
|---|---|---|
| 1 | KUSHIRO-SHI; KITAMI-SHI; ABASHIRI-SHI; RUMOI-SHI; WAKKANAI-SHI; MONBETSU-SHI; NEMURO-SHI; SOYA BRANCH OFFICE AREA; RUMOI BRANCH OFFICE AREA; ABASHIRI BRANCH OFFICE AREA; NEMURO BRANCH OFFICE AREA; KUSHIRO BRANCH OFFICE AREA; | 9.806 |
| 2 | SAPPORO-SHI; OTARU-SHI; ASAHIKAWA-SHI; YUBARI-SHI; IWAMIZAWA-SHI; BIBAI-SHI; ASHIBETSU-SHI; EBETSU-SHI; AKAHIRA-SHI; SHIBETSU-SHI; NAYO-SHI; MIKASA-SHI; CHITOSE-SHI; TAKIGAWA-SHI; SUNAGAWA-SHI; KASINAI-SHI; HUKAGAWA-SHI; ENIWA-SHI; HURANO-SHI; ISHIKARI BRANCH OFFICE AREA; GOSHINAI BRANCH OFFICE AREA; KAWAKAMI BRANCH OFFICE AREA; KUCHI BRANCH OFFICE AREA; | 9.805 |
| 3 | HAKODATE-SHI; MURORANN-SHI; OBIHIRO-SHI; TOMAKOMAI-SHI; NOBORIBETSU-SHI; DATE-SHI; TOSHIMA BRANCH OFFICE AREA; HIYAMA BRANCH OFFICE AREA; TANHURI BRANCH OFFICE AREA; HIDAKA BRANCH OFFICE AREA; TOKACHI BRANCH OFFICE AREA; | 9.804 |
| 4 | AOMORI-KEN; | 9.803 |
| 5 | IWATE-KEN; AKITA-KEN; | 9.802 |
| 6 | MIYAGI-KEN; YAMAGATA-KEN; | 9.801 |
| 7 | FUKUSHIMA-KEN; IBARAGI-KEN; NIIGATA-KEN; | 9.800 |
| 8 | TOCHIGI-KEN; TOYAMA-KEN; ISHIKAWA-KEN; | 9.799 |
| 9 | TOKYO-TO (EXCEPT FOR HACHIJO BRANCH OFFICE AREA AND OGASAWARA BRANCH OFFICE AREA); GUNMA-KEN; SAITAMA-KEN; CHIBA-KEN; FUKUI-KEN; KYOTO-FU; TOTTORI-KEN; SHIMANE-KEN; | 9.798 |
| 10 | KANAGAWA-KEN; YAMANASHI-KEN; NAGANO-KEN; GIFU-KEN; SHIZUOKA-KEN; AICHI-KEN; MIE-KEN; SHIGA-KEN; OSAKA-FU; HYOGO-KEN; NARA-KEN; WAKAYAMA-KEN; OKAYAMA-KEN; HIROSHIMA-KEN; YAMAGUCHI-KEN; TOKUSHIMA-KEN; KAGAWA-KEN; | 9.797 |
| 11 | TOKYO-TO (ONLY HACHIJO BRANCH OFFICE AREA); EHIME-KEN; KOCHI-KEN; FUKUOKA-KEN; SAGA-KEN; NAGASAKI-KEN; OITA-KEN; | 9.796 |
| 12 | KUMAMOTO-KEN; MIYAZAKI-KEN; | 9.795 |
| 13 | KAGOSHIMA-KEN (EXCEPT FOR NASE-SHI AND OSHIMA-GUN); | 9.794 |
| 14 | TOKYO-TO (ONLY OGASAWARA BRANCH OFFICE AREA); | 9.793 |
| 15 | KAGOSHIMA-KEN (ONLY NASE-SHI AND OSHIMA-GUN); | 9.792 |
| 16 | OKINAWA-KEN | 9.791 |

## FIG. 10A

SQUARE WAVE
(1kHz, SERIES OF TONES)

0.2s   0.1s

START DATA

1   0   1   1

END DATA

GRAVITY CORRECTION DATA

## FIG. 10B

0.2s   0.1s

START DATA

0   0   1   1

END DATA

GRAVITY CORRECTION DATA

## FIG. 11

SQUARE WAVE
(4kHz, SERIES OF TONES)

0.2s   0.1s

COMPLETION DATA

# FIG. 12

ZONE NUMBER OF AREA
WHERE DEVICE IS USED: 11

$$0.00 \text{ kg}$$

# FIG. 13

OPTICAL
CORRECTION
SIGNAL RECEIVER — 71

LIGHT
RECEIVING — 75
SENSOR

↓

AMPLIFIER — 76

↓

FILTER — 77

↓

COMPARATOR — 78

↓

CORRECTION
SIGNAL — 54
DECISION UNIT

↓

## FIG. 14

**OPTICAL COMPLETION SIGNAL TRANSMITTER** — 72

| LIGHT EMITTING ELEMENT | — 80 |

| DRIVER | — 79 |

| COMPLETION TRANSMISSION CONTROLLER | — 57 |

## FIG. 15

**OPTICAL COMPLETION SIGNAL RECEIVER** — 73

| LIGHT RECEIVING SENSOR | — 81 |

| AMPLIFIER | — 82 |

| FILTER | — 83 |

| COMPARATOR | — 84 |

| COMPLETION SIGNAL DECISION UNIT | — 19 |

FIG. 16

OPTICAL CORRECTION SIGNAL TRANSMITTER ← 74

LIGHT EMITTING ELEMENT — 86

DRIVER — 85

CORRECTION TRANSMISSION CONTROLLER — 11

FIG. 17

ELECTROMAGNETIC CORRECTION SIGNAL RECEIVER ← 91

MAGNETIC SENSOR — 95

AMPLIFIER — 96

COMPLETION SIGNAL DECISION UNIT — 54

**FIG. 18**

ELECTROMAGNETIC COMPLETION SIGNAL TRANSMITTER — 92

ELECTROMAGNET — 98

DRIVER — 97

COMPLETION TRANSMISSION CONTROLLER — 57

**FIG. 19**

ELECTROMAGNETIC COMPLETION SIGNAL RECEIVER — 93

MAGNETIC SENSOR — 99

AMPLIFIER — 100

COMPLETION SIGNAL DECISION UNIT — 19

# FIG. 20

ELECTROMAGNETIC
CORRECTION
SIGNAL
TRANSMITTER — 94

ELECTROMAGNET — 102

DRIVER — 101

CORRECTION
TRANSMISSION
CONTROLLER — 11

**European Patent Office**

## EUROPEAN SEARCH REPORT

Application Number

EP 03 02 3831

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 878 376 A (SCHURR MICHAEL) 2 March 1999 (1999-03-02) * column 3, line 45 - column 4, line 43 * * claims 1,7 * * figure 1 * | 1,8,14 | G01G23/01 |
| Y | | 3,5,10, 12,16,18 | |
| A | | 2,4,6,7, 9,11,13, 15,17,19 | |
| X | FR 2 818 374 A (NEOPOST IND) 21 June 2002 (2002-06-21) * page 4, line 4 - page 6, line 31 * * claim 1 * * figure 1 * | 3,5,10, 12,16,18 | |
| A | PATENT ABSTRACTS OF JAPAN vol. 2000, no. 26, 1 July 2002 (2002-07-01) -& JP 2001 257723 A (UNIDATA COMMUNICATION SYSTEMS INC), 21 September 2001 (2001-09-21) * abstract * * figure 1 * | 1,8,14 | TECHNICAL FIELDS SEARCHED (Int.Cl.7) G01G G07B |
| Y | FR 2 755 555 A (DEBREANE ETS) 7 May 1998 (1998-05-07) * page 12, line 29 - page 13, line 29 * * figures 1,7 * | 3,10,16 | |
| Y | EP 0 631 118 A (METTLER TOLEDO ALBSTADT GMBH) 28 December 1994 (1994-12-28) * claims 1,5,6 * * figure 1 * | 5,12,18 | |

The present search report has been drawn up for all claims

| Place of search | Date of completion of the search | Examiner |
|---|---|---|
| MUNICH | 26 January 2004 | Grand, J-Y |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 03 02 3831

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2004

| Patent document cited in search report | | Publication date | Patent family member(s) | | Publication date |
|---|---|---|---|---|---|
| US 5878376 | A | 02-03-1999 | DE | 19619854 A1 | 20-11-1997 |
| | | | EP | 0807805 A2 | 19-11-1997 |
| FR 2818374 | A | 21-06-2002 | FR | 2818374 A1 | 21-06-2002 |
| JP 2001257723 | A | 21-09-2001 | KR | 2001084869 A | 06-09-2001 |
| | | | CN | 1311600 A | 05-09-2001 |
| FR 2755555 | A | 07-05-1998 | FR | 2755555 A1 | 07-05-1998 |
| EP 0631118 | A | 28-12-1994 | DE | 4320892 A1 | 05-01-1995 |
| | | | AT | 165442 T | 15-05-1998 |
| | | | DE | 59405752 D1 | 28-05-1998 |
| | | | EP | 0631118 A1 | 28-12-1994 |
| | | | ES | 2068804 T1 | 01-05-1995 |